# EUROPÄISCHE PATENTSCHRIFT

(11) **EP 2 364 577 B1**
(45) Veröffentlichungstag und Bekanntmachung des Hinweises auf die Patenterteilung: **12.08.2015**
(21) Anmeldenummer: 09799054.3
(22) Anmeldetag: 30.11.2009
(51) Int. Cl.: H05B 41/292

(54) **VERFAHREN UND BETRIEBSGERÄT ZUM FESTSTELLEN EINER AKUSTISCHEN RESONANZ BEI EINER HID-LAMPE**
METHOD AND OPERATING DEVICE FOR DETERMINING AN ACOUSTIC RESONANCE IN A HID LAMP
PROCÉDÉ ET BALLAST DESTINÉS À DÉTECTER UNE RÉSONANCE ACOUSTIQUE D'UNE LAMPE HID (À DÉCHARGE À HAUTE INTENSITÉ)

(30) Priorität: 08.12.2008 DE 102008061088
(43) Veröffentlichungstag der Anmeldung: 14.09.2011
(73) Patentinhaber: Tridonic AG, 8755 Ennenda (CH)
(72) Erfinder: PEREIRA, Eduardo, CH-8854 Siebnen (CH)
(74) Vertreter: Rupp, Christian
(86) Internationale Anmeldenummer: PCT/EP2009/066067
(87) Internationale Veröffentlichungsnummer: WO 2010/076105

(56) Entgegenhaltungen:
- EP-A2- 1 768 468
- US-A- 5 942 860

## Beschreibung

Die Erfindung betrifft ein Verfahren zum Feststellen einer akustischen Resonanz bei einer von einem Betriebsgerät mit hochfrequentem Betriebsstrom versorgten HID ("High Intensity Discharge", Hochdruckgasentladung)-Lampe, bei dem ein von dem Betriebsgerät mit übertragenes und an die HID-Lampe mitgeliefertes periodisches Detektionssignal zum Feststellen der Resonanz ausgewertet wird.

Akustische Resonanzen sind ein Phänomen, das bei HID-Lampen, die mit einem hochfrequenten Betriebsstrom im kHz-Bereich versorgt werden, auftritt. Die akustischen Resonanzen sind eine Folge von stehenden Druckwellen, wie sie beispielsweise auch in Orgelpfeifen entstehen. Durch diese stehenden Wellen verformt sich der normalerweise gerade Lichtbogen in der Lampe derart, dass er bogen- oder wellenförmig erscheint. Außerdem werden durch die akustischen Resonanzen elektrische Parameter der Lampe beeinflusst. So kann beispielsweise die Bogenspannung erhöht und mit einer Niederfrequenzkomponente moduliert werden. Dies wiederum hat auch von außen wahrnehmbare Störungen zur Folge, wie beispielsweise der Erzeugung von Tönen im Hörbereich, Flackern der Helligkeit oder eine Modulation der Farbe des von der Lampe abgestrahlten Lichtes.

Die Erfindung geht von dem Eingangs beschriebenen Verfahren aus, dass Gegenstand der US 5,942,860 ist. Dieses Verfahren basiert darauf, dass die Betriebsgeräte für HID-Lampen normalerweise vom Wechselstromnetz gespeiste AC/DC-Konverter enthalten, die eine Gleichspannung erzeugen, welche in einem Wechselrichter zu einem hochfrequenten Betriebsstrom für die Lampe umgesetzt wird. Die von dem AC/DC-Konverter erzeugte Gleichspannung hat - wenn auch unerwünscht - in der Regel eine geringe Modulation mit der doppelten Frequenz der gleichgerichteten Wechselspannung, für die sich der englische Begriff "Ripple" durchgesetzt hat. Die Modulation wird von dem Wechselrichter mit übertragen und findet sich schließlich auch auf dem hochfrequenten Betriebsstrom für die Lampe. Wenn in der HID-Lampe eine akustische Resonanz auftritt, so hat dies Rückwirkungen auf den hochfrequenten Betriebsstrom, und zwar derart, dass die Modulation gestört wird, oder überhaupt nicht mehr erkennbar ist.

Wie vorstehend angedeutet wurde, ist die Modulation des hochfrequenten Betriebsstromes mit der Halbnetzfrequenz unerwünscht. Beim Entwurf von Betriebsgeräten ist man grundsätzlich bemüht, eine derartige Modulation zu vermeiden oder möglichst gering zu halten. Wenn eine solche Modulation sehr gering ist, oder gar nicht auftritt, so ist das bekannte Verfahren funktionsunfähig.

Wenn die HID-Lampe ausgehend von einer DC-Spannung (bspw. einer Batterie) versorgt ist, versagt das bekannte Verfahren.

Zudem kann bei den bisher bekannten Verfahren zum Feststellen einer akustischen Resonanz das Problem auftreten, dass Störungen oder Schwankungen der Spannung des Wechselstromnetzes zu einem falschen Feststellen einer akustischen Resonanz führen können. Es kann beispielsweise das Auftreten einer akustischen Resonanz nicht erkannt werden oder aber auch eine Störung der Spannung des Wechselstromnetzes als Auftreten einer akustischen Resonanz interpretiert werden.

Aus der EP1768468S2 ist es bekannt, eine HID-Lampe mit einer Halbbrückenschaltung anzusteuern, die asymmetrisch betrieben werden kann, so dass der Versorgungsspannung der HID-Lampe ein DC-Anteil überlagert wird.

Der Erfindung liegt deshalb die Aufgabe zugrunde, ein Verfahren zum Feststellen von akustischen Resonanzen bei HID-Lampen anzugeben, welches in jeder Betriebsphase sicher funktioniert und unabhängig von der Existenz einer Modulation mit doppelter Netzfrequenz auf dem hochfrequenten Betriebsstrom ist.

Die Lösung der Erfindung ist Gegenstand des Kennzeichens des Anspruches 1. Sie besteht darin, dass das Detektionssignal intern in dem Betriebsgerät und somit gezielt, d.h. unabhängig von der Versorgungsspannung, für den Zweck der Feststellung der akustischen Resonanz erzeugt wird.

Das Detektionssignal kann bspw. erzeugt werden, indem die Versorgungsspannung eines Wechselrichters, bspw. einer Halbbrücken- oder Vollbrückenschaltung, des Betriebsgeräts gezielt moduliert wird. Das Detektionssignal wird also nicht über eine Modulation der Taktung des Wechselrichters (Halbbrücke, Vollbrücke) erreicht.

Die Versorgungsspannung des Wechselrichters kann gezielt durch einen aktiv getakteten PFC-Converter des Betriebsgeräts moduliert werden, bspw. indem der Sollwert der Regelung des PFC-Converters moduliert wird.

Dieses Detektionssignal hat vorzugsweise eine Periodendauer und/oder Amplitudenform, die von der durch die Netzspannung verursachten Modulation des Betriebsstromes der HID-Lampe abweicht.

Besonders zweckmäßig ist es, wenn das Detektionssignal sägeförmig ist. Dies zeigt sich dann, wenn gemäß einer Weiterbildung der Erfindung sowohl das Detektionssignal als auch das aus dem modulierten Betriebsstrom abgeleitete Modulationssignal für sich nach der Zeit differenziert und miteinander verglichen werden. Bei Differenzierung eines sägezahnförmigen Detektionssignales nach der Zeit erhält man einen einfachen Gleichspannungswert. Durch Digitalisierung der Gleichspannungswerte ist ein besonders einfacher vergleich möglich.

Die Erfindung betrifft ferner ein Betriebsgerät für HID-Lampe,
mit einem an das Netz anzuschließenden AC/DC-Wandler, mit einem von dem AC/DC-Wandler mit Gleichspannung versorgten Wechselrichter, der einen hochfrequenten Betriebsstrom für die HID-Lampe erzeugt,
mit einem Filter zum Ausfiltern eines von dem Betriebsgerät mitübertragenen periodischen Detektionssignales,
und mit einer Auswerteschaltung, der das ausgefilterte Detektionssignal zugeführt und zur Feststellung einer akustischen Resonanz ausgewertet wird.

Ein solches Betriebsgerät ist nach der US 5,942,860 bekannt. Die oben für das Verfahren definierte Aufgabenstellung gilt gleichermaßen für das Betriebsgerät.

Die Lösung für das Betriebsgerät ist gekennzeichnet durch einen mit dem Betriebsgerät verbundenen Generator zum Erzeugen des Detektionssignales vorbestimmer Frequenz.

Der Generator zum Erzeugen des Detektionssignales kann die Versorgungsspannung eines Wechselrichters, bspw. einer Halbbrücken- oder Vollbrückenschaltung, modulieren.

Der Generator zum Erzeugen des Detektionssignales kann die Versorgungsspannung des Wechselrichters gezielt durch einen aktiv getakteten PFC-Converter modulierent, bspw. indem eine Steuereinheit den Sollwert der Regelung des PFC-Converters moduliert.

Das Detektionssignal kann sich dadurch auszeichnen, dass es eine von der durch die Netzspannung verursachten Modulation des Betriebsstromes der HID-Lampe abweichende Periodendauer und/oder Amplitudenform haben kann.

Der Ordnung halber soll noch darauf hingewiesen werden, dass der Inhalt der Ansprüche auch zum Offenbarungsgehalt der Beschreibung zählen soll.

Ausführungsbeispiele der Erfindung werden nachfolgend anhand der Zeichnungen beschrieben.

Es zeigen:
- **Figur 1**: einen Längsschnitt durch eine HID-Lampe mit einem durch eine akustische Resonanz verformten Lichtbogen;
- **Figur 2**: einen Querschnitt II-II durch die in Figur 1 gezeigte HID-Lampe;
- **Figur 3**: einen Querschnitt III-III durch die in Figur 1 gezeigte HID-Lampe;
- **Figur 4**: ein Betriebsgerät nach dem Stand der Technik;
- **Figur 5**: eine verallgemeinerte Ausführungsform der Erfindung;
- **Figur 6**: eine speziellere Ausführungsform der Erfindung.

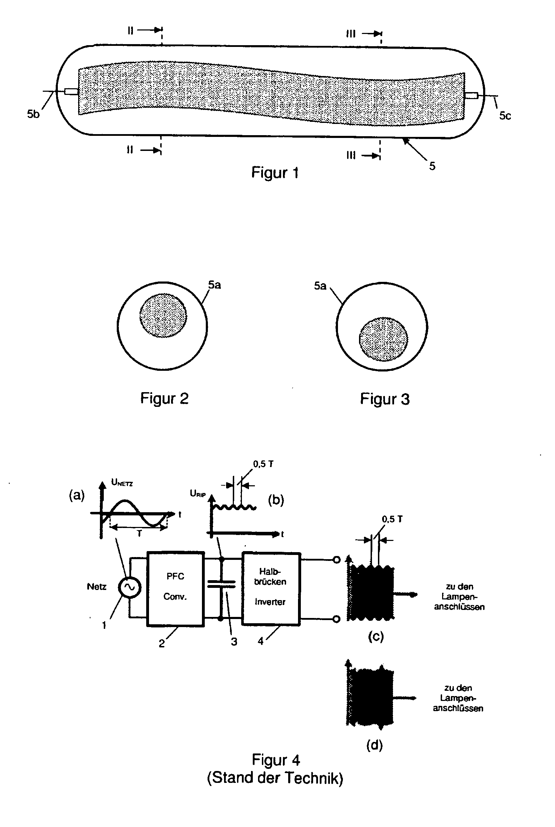

In den **Figuren 1-3** schematisiert dargestellte HID-Lampe 5 weist einen Glaskolben 5a und zwei Elektroden 5b, 5c auf. Der sich zwischen den Elektroden 5b und 5c entwickelte Lichtbogen ist im Normalfall gerade. Wenn sich in dem Lichtboden jedoch eine akustische Resonanz ausbildet so verformt sich der Lichtbogen, wie dargestellt. Die Verformung hat ihre Ursachen in stehenden Wellen, die wiederum die elektrischen Parameter der Lampe beeinflussen. So wird beispielsweise die Bogenspannung erhöht und der Betriebsstrom - wie später noch genauer gezeigt wird - mit einer Niederfrequenzkomponente moduliert.

**Figur 4** zeigt ein Betriebsgerät nach dem Stand der Technik (US 5,942,860) mit welchem ermittelt werden kann, ob eine akustische Resonanz aufgetreten ist. Das Betriebsgerät besteht aus einem an das Wechselstromnetz 1 angeschlossenen PFC-Konverter 2, der aus der Netzwechselspannung eine Gleichspannung erzeugt, die einem Speicherkondensator 3 zugeführt wird. Die Netzwechselspannung ist unter (a) dargestellt. Die an dem Kondensator 3 auftretende Gleichspannung ist normalerweise mit der doppelten Netzfrequenz moduliert, wie dies unter (b) gezeigt ist. Diese Modulation ist unerwünscht, und die Designer von Betriebsgeräten dieser Art versuchen Massnahmen vorzusehen, die Modulation möglichst zu unterdrücken. Die Gleichspannung wird einem Halbbrücken-Inverter 4 zugeführt, der bekanntermaßen zwei im Gegentakt geschaltete elektronische Schalter enthält. Die Taktung erfolgt mit Hochfrequenz im kHZ-Bereich. Der über einem der beiden Schalter abgenommene Betriebsstrom wird normalerweise einem - nicht eigens dargestellten - Serienresonanzkreis zugeführt, der auf die Taktfrequenz abgestimmt ist. An dem Kondensator des Serienresonanzkreises entsteht eine Resonanzüberhöhung, die dazu führt, dass die Betriebsspannung im kV-Bereich liegt.

Die unter (b) gezeigte Modulation der Gleichspannung mit doppelter Netzfrequenz wird von dem Halbbrückeninverter 4 mitübertragen und erscheint auch bei dem unter (c) dargestellten hochfrequenten Betriebsstrom, der den Lampenanschlüssen zugeführt wird. Die Modulation des Betriebsstromes mit der doppelten Netzfrequenz erscheint in der dargestellten Form (c) jedoch nur, wenn in der Lampe keine akustische Resonanz auftritt. Tritt diese auf, so hat das eine entsprechende Rückwirkung auf den Betriebsstrom, mit der Folge, dass das Modulationsbild verzerrt wird oder gar nicht mehr erkennbar ist. Dies ist unter (b) dargestellt.

Die akustische Resonanz führt nicht nur dazu, dass der Lichtbogen nicht mehr gerade, sondern bogen- oder wellenförmig verzerrt ist, sondern sie hat auch unangenehme Störgeräusche im Hörbereich, ein Flackern der Helligkeit und eine Modulation der Farbe des abgestrahlten Lichtes zur Folge.

Nach der US 5,942,860 wird dem Auftreten einer akustischen Resonanz dadurch begegnet, dass die Schaltfrequenz für den Halbbrückeninverter 4 verändert wird. Dazu muss jedoch zunächst festgestellt werden, ob eine akustische Resonanz vorliegt. Das Verfahren nach der US 5,942,860 wertet dazu die Modulation auf dem hochfrequenten Betriebsstrom ("Ripple") aus. Dazu wird die Modulation aus dem hochfrequenten Betriebsstrom herausgefiltert und daraufhin untersucht, ob eine Symmetrie in der Amplitude oder in der Zeit feststellbar ist. Bei nichtvorhandener Resonanz gemäß **Figur 4** (c) zeigen die Modulationswellen Symmetrie; wenn dagegen der Betriebsstrom die Form nach **Figur 4** (d) hat, so liegt Asymmetrie vor. Dieses Kriterium wird ausgenutzt, um die Schaltfrequenz für den Halbbrücken-Inverter 4 zu verändern.

Das angeführte Verfahren funktioniert nicht, wenn eine Modulation gemäß **Figur 4** (b) nicht vorhanden ist oder so gering ist, dass sie im Rauschen untergeht und nicht mehr ausgewertet werden kann. Letzteres wird, wie erwähnt durch die Designer von Betriebsgeräten für HID-Lampen angestrebt.

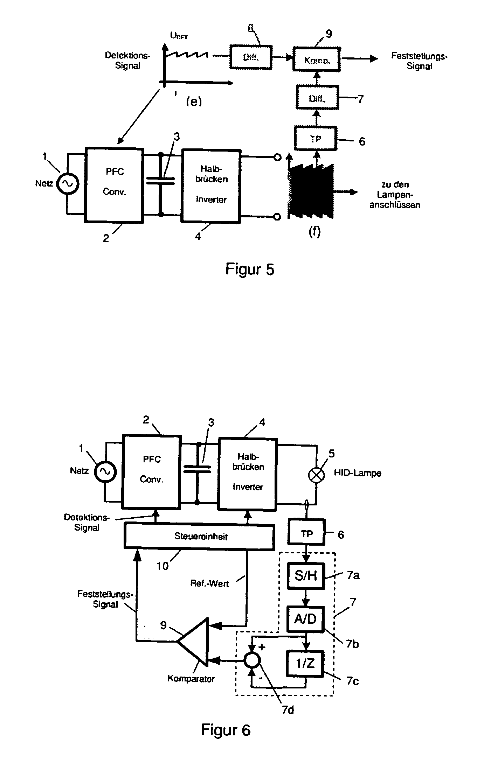

Das in **Figur 5** dargestellte Betriebsgerät und das Betriebsverfahren, mit dem dieses Betriebsgerät arbeitet, setzen kein unerwünschte Modulation der Gleichspannung gemäß **Figur 4** (b) des hochfrequenten Betriebsstromes gemäß **Figur 4** (c) mehr voraus. Der PFC-Konverter 2, der Kondensator 3 und der Halbbrücken-Inverter 4 mit nicht dargestellten Resonanzschaltungen sind so gestaltet und geschaltet wie bei dem bekannten Betriebsgerät nach **Figur 4**. Insofern wird auf diese Erläuterungen vollinhaltlich verwiesen.

Neu ist, dass bei dem Betriebsgerät nach **Figur 5** eigens für den Zweck der Feststellung einer akustischen Resonanz ein Detektionssignal erzeugt wird, dass unter (e) dargestellt ist. Dieses Detektionssignal ist niederfrequent und sägezahnförmig. Es wird einerseits dem PFC-Konverter 2 zugeführt und andererseits einer Auswerteschaltung, die einen Tiefpass 6, zwei Differenzierglieder 7 und einen Komparator 9 umfasst.

Der PFC-Konverter 2 gemäss der Erfindung erzeugt dadurch also gezielt eine Modulation seiner Ausgangsspannung, bspw. durch Modulation des Sollwerts seiner Regelung, welche Modulation als Detektionssignal verwendet werden kann. Die Modulation betrifft also bereits den Bereich der Erzeugung der DC-Versorgungsspannung für den Wechselrichter. Die Modulation der Versorgungsspannung ist vorzugsweise sägezahnförmig.

Aus der Modulation der Ausgangsspannung des PFCs uns somit der Versorgungsspannung des Wechselrichters resultiert ein von dem Betriebsgerät erzeugter hochfrequenter Betriebsstrom wie unter (f) dargestellt, der also mit dem Detektionssignal moduliert ist. Das Modulationssignal des Betriebsstromes wird mit dem Tiefpass 6 herausgefiltert und dann in ein Differenzierglied 7 nach der Zeit differenziert. Das original erzeugte Detektionssignal wird dem Differenzierglied 8 zugeführt und ebenfalls nach der Zeit differenziert. Wird eine Sägezahnspannung nach der Zeit differenziert, so entsteht bekanntlich als Ergebnis eine konstante Gleichspannung. Eine solche liegt demnach am Ausgang des Differenziergliedes 8 vor. Wenn das mit dem Tiefpass 6 herausgefilterte Modulationssignal des hochfrequenten Betriebsstromes ebenfalls eine reine Sägezahnspannung ist, so entsteht auch am Ausgang des Differenziergliedes 7 eine konstante Gleichspannung. Die Ausgangsprodukte der beiden Differenzierglieder 7 und 8 werden einem Komparator 9 zugeführt. Dieser erzeugt bei Gleichheit der Ausgangsprodukte der beiden Differenzierglieder 7 und 8 kein Signal. Wenn dagegen die Modulation des Betriebsstromes gemäß (f) durch eine akustische Resonanz verzerrt ist, so entsteht am Ausgang des Differenziergliedes 7 keine konstante Gleichspannung mehr. Das hat zur Folge, dass der Komparator 9 einen Unterschied zwischen den ihm zugeführten Spannungen feststellt und dementsprechend ein eine akustische Resonanz anzeigendes Feststellungssignal erzeugt.

Das Betriebsgerät nach **Figur 6** ist etwas detaillierter als das nach **Figur 5**. Es zeigt insbesondere eine konkretere Ausgestaltung des Differenziergliedes 7. Dieses besteht aus einer Sample-and-Hold-Schaltung 7a, einem sich daran anschließenden A/D-Wandler 7b, einem Verzögerungsglied 7c und einem Subtrahierglied 7d. Das von dem Tiefpass 6 herausgefilterte Modulationssignal des hochfrequenten Betriebsstromes wird in der Sample-and-Hold-Schaltung 7a in bestimmten Zeitabständen abgetastet. Die Abtastwerte werden in dem A/D-Wandler 7b digitalisiert. Das Subtrahierglied 7d ist mit dem Eingang und dem Ausgang des Verzögerungsgliedes 7c verbunden. Letzteres verzögert um den Abtastzeitabstand der Sample-and-Hold-Schaltung 7a. Wenn der Abtastzeitabstand wesentlich kleiner als die Periodendauer des Modulationssignales ist, so tritt am Ausgang des Subtrahiergliedes 7d ein Signalwert auf, der dem einen Eingang des Komparators 9 zugeführt wird. Dieser Signalwert ist eine konstant bleibende Gleichspannung, solange dass aus dem hochfrequenten Betriebsstrom ausgefilterte Modulationssignal sägezahnförmig ist. Dem anderen Eingang des Komparators 9 wird ein Referenzwert zugeführt, der einen differenzierten originalen Detektionssignalwert repräsentiert. Wenn das Detektionssignal - wie im vorliegenden konkreten Fall vorausgesetzt - sägezahnförmig ist, so ist der Referenzwert ebenfalls eine konstant bleibende Gleichspannung. Das Ergebnis des Vergleichs meldet der Komparator 9 der Steuereinheit. Wie beschrieben, gibt der Komparator 9 nur dann eine akustische Resonanzanzeige des Feststellungssignals aus, wenn die dem Komparator 9 zugeführten Signalwerte ungleich sind.

Die Steuereinheit ist sowohl mit dem PFC-Konverter 2 als auch mit dem Halbbrücken-Inverter 4 verbunden. Die Steuereinheit 10 enthält den (nicht dargestellten) Generator zur Erzeugung des sägezahnförmigen Detektionssignales und führt dies dem PFC-Konverter 2 zu. Ferner erzeugt die Steuereinheit 10 die Hochfrequenz, mit der die Schalter des Halbbrücken-Inverters getaktet werden. Wenn der Steuereinheit 10 von dem Komparator 9 ein Feststellungssignal gemeldet wird, so verändert die Steuereinheit 10 die hochfrequente Schaltfrequenz für den Halbbrücken-Inverter 4, um der akustischen Resonanz derart entgegenzusteuern, dass diese möglichst wieder verschwindet.

Es ist aber auch möglich, dass die Steuereinheit 10 mit dem Halbbrücken-Inverter 4 verbunden ist, um diesem das Detektionssignal zuzuführen. In diesem Fall moduliert der Halbbrücken-Inverter 4 die Hochfrequenz, mit der die Schalter des Halbbrücken-Inverters getaktet werden.

Statt einer Halbbrückenschaltung kann natürlich auch eine Vollbrückenschaltung verwendet werden.

## Patentansprüche

1. Verfahren zum Betrieb einer HID-Lampe (5), wobei
- ein Betriebsgerät einen Wechselrichter aufweist, der von einem an das Netz (1) angeschlossenen AC/DC-Wandler mit Gleichspannung versorgt wird, wobei der Wechselrichter einen hochfrequenten Betriebsstrom für die HID-Lampe (5) erzeugt, mit dem das Betriebsgerät die HID-Lampe versorgt,
- ein Frequenzfilter (6) ein von dem Betriebsgerät mit dem hochfrequenten Betriebsstrom an die HID-Lampe mitübertragenes periodisches Detektionssignal ausfiltert, und wobei
- einer Auswerteschaltung das durch den Frequenzfilter (6) ausgefilterte Detektionssignal zugeführt wird, wobei die Auswerteschaltung das ausgefilterte Detektionssignal zur Feststellung einer akustischen Resonanz auswertet,
**gekennzeichnet dadurch, dass**
- ein in dem Betriebsgerät enthaltener Generator die Versorgungsspannung des Wechselrichters des Betriebsgeräts moduliert und somit das Detektionssignal gezielt, d.h. unabhängig von der Versorgungsspannung, für den Zweck der Feststellung der akustischen Resonanz erzeugt.

2. Verfahren nach Anspruch 1,
bei dem zur Erzeugung des Detektionssignals die Versorgungsspannung des Wechselrichters gezielt durch einen aktiv getakteten PFC-Converter (2) des Betriebsgeräts moduliert wird, bspw. indem der Sollwert der Regelung des PFC-Converters moduliert wird.

3. Verfahren nach einem der vorhergehenden Ansprüche,
wobei das Detektionssignal eine Periodendauer und/oder Amplitudenform hat, die von der Periodendauer und/oder Amplitudenform der durch eine Netzfrequenz verursachten Modulation des Betriebsstromes der HID-Lampe abweicht.

4. Verfahren nach einem der vorhergehenden Ansprüche,
**dadurch gekennzeichnet,**
**dass** das Detektionssignal sägezahnförmig ist.

5. Verfahren nach einem der vorhergehenden Ansprüche,
**dadurch gekennzeichnet,**
**dass** sowohl das von dem Generator erzeugte Detektionssignal als auch das durch den Frequenzfilter (6) ausgefilterte Detektionssignal für sich nach der Zeit differenziert und dann miteinander verglichen werden.

6. Verfahren nach Anspruch 1,
**dadurch gekennzeichnet,**
**dass** das ausgefilterte Detektionssignal aus dem modulierten Betriebstrom durch Ausfiltern in einem Tiefpass gewonnen wird,
**dass** das ausgefilterte Detektionssignal in einer Sample-and-Hold-Schaltung abgetastet wird
**dass** die Abtastwerte dann in einem A/D-Wandler digitalisiert werden,
**dass** von jedem aktuellen Abtastwert der vorige um den Abtastzeitabstand verzögerte Abtastwert subtrahiert wird,
**dass** der Subtraktionswert mit einem vorgegebenen einen Differenziations-Istwert repräsentierenden Referenzwert verglichen wird,
und **dass** bei einer Abweichung des Subtraktionswertes von dem Referenzwert ein einer akustischere Resonanz anzeigendes Feststellungssignal ausgegeben wird.

7. Verfahren nach Anspruch 6,
**dadurch gekennzeichnet,**
**dass** das Feststellungssignal zum Verändern der Frequenz des hochfrequenten Betriebsstromes verwendet wird.

8. Betriebsgerät für eine HID-Lampe (5),
mit einem an das Netz (1) anzuschließenden AC/DC-Wandler,
mit einem von dem AC/DC-Wandler mit Gleichspannung versorgten Wechselrichter, der einen hochfrequenten Betriebsstrom für die HID-Lampe (5) erzeugt,
mit einem Frequenzfilter (6) zum Ausfiltern eines von dem Betriebsgerät mit dem hochfrequenten Betriebstrom an die HiDLampe mitübertragenen periodischen Detektionssignales,
und mit einer Auswerteschaltung, der das ausgefilterte Detektionssignal zugeführt wird und wobei die Auswerkschaltung zur Feststellung einer akustischen Resonanz das ausgefilterte Detektionssignal auswertet,
**gekennzeichnet durch**,
einen in dem Betriebsgerät enthaltenen Generator das zum Erzeugen des Detektionssignales die Versorgungsspannung des Wechselrichters moduliert und somit das Detektionssignales gezielt, d.h. unabhängig von der Versorgungsspannung des Wechselrichters, für den Zweck der Feststellung der akustische Resonanz erzeugt.

9. Betriebsgerät nach Anspruch 8,
bei dem der Generator zum Erzeugen des Detektionssignales die Versorgungsspannung des Wechselrichters gezielt durch einen aktiv getakteten PFC-Converter (2) moduliert, bspw. indem eine Steuereinheit den Sollwert der Regelung des PFC-Converters (2) moduliert.

10. Betriebsgerät nach Anspruch 8 oder 9,
wobei das Detektionssignal eine von der durch die Netzspannung verursachte Modulation des Betriebsstromes der HID-Lampe (5) abweichende Periodendauer und /oder Amplitudenform hat.

11. Betriebsgerät nach einem der Ansprüche 8 bis 10,
**dadurch gekennzeichnet,**
**dass** der AC/DC-Wandler einen PFC-Converter (2) aufweist,
und **dass** der Wechselrichter ein Halbbrücken-Inverter (4) mit zwei gegensinnig mit Hochfrequenz getakteten Schaltern ist.

12. Betriebsgerät nach einem der Ansprüche 8 bis 11,
**dadurch gekennzeichnet,**
**dass** die Auswerteschaltung zwei Differenzierschaltungsteile (7,8) enthält,
wobei dem einen (8) das von dem Generator erzeugte Detektionssignal und dem anderen (7) das ausgefilterte Detektionssignal zugeführt wird, und dass die Ausgänge der beiden Differenzierschaltungsteile (7,8) mit einem Komparator (9) verbunden sind, der bei einer Abweichung des differenzierten ausgefilterten Detektionssignales von dem differenzierten Detektionssignal ein eine akustische Resonanz anzeigendes Feststellungssignal ausgibt.

13. Betriebsgerät nach einem der Ansprüche 8 bis 12,
**dadurch gekennzeichnet,**
**dass** der Differenzierschaltungsteil (7) für das ausgefilterte Detektionssignal eine Sample-and-Hold-Schaltung (7a), einen sich daran anschließenden A/D-Wandler (7b) und ein sich daran anschließendes Verzögerungsglied (7c) enthält,
**dass** die Verzögerungszeit des Verzögerungsgliedes (7c) gleich dem Abtastzeitabstand der Sample-and-Hold-Schaltung (7a) ist,
**dass** der Differenzierschaltungsteil (7) ferner ein Subtrahierglied (7d) enthält, das einerseits mit dem Eingang und andererseits mit dem Ausgang des Verzögerungsgliedes (7c) verbunden ist,
**dass** der Ausgang des Subtrahiergliedes (7d) mit dem Eingang eines Komparators (9) verbunden ist,
**dass** dem anderen Eingang des Komparators (9) ein Referenzwert zugeführt wird, der einen differenzierten Detektionssignalwert repräsentiert,
und **dass** der Komperator (9) bei Abweichung der seinen Eingängen zugeführten Signalwerte ein eine akustische Resonanz anzeigendes Feststellungssignal abgibt.

14. Betriebsgerät nach einem der Ansprüche 12 oder 13,
**dadurch gekennzeichnet,**
**dass** das Betriebsgerät eine Steuereinheit (10) aufweist, die den Generator zur Erzeugung des Detektionssignales enthält,
**dass** die Steuereinheit mit dem Komparator (9) zum Empfang und zur Auswertung des Feststellungssignales verbunden ist,
**dass** die Steuereinheit (10) mit dem AC/DC-Wandler verbunden ist, um diesem das Detektionssignal zuzuführen,
und **dass** die Steuereinheit (10) ferner mit dem Wechselrichter verbunden ist, um die Frequenz des von diesem erzeugten hochfrequenten Betriebsstromes für die HID-Lampe (5) zu ändern, wenn der Steuereinheit (10) ein Feststellungssignal zugeführt wird.

15. Betriebsgerät nach einem der Ansprüche 12 bis 14,
**dadurch gekennzeichnet,**
**dass** das Betriebsgerät eine Steuereinheit (10) aufweist, die den Generator zur Erzeugung des Detektionssignales enthält,
**dass** die Steuereinheit mit dem Komparator (9) zum Empfang und zur Auswertung des Feststellungssignales verbunden ist,
**dass** die Steuereinheit (10) mit dem Halbbrücken-Inverter (4) verbunden ist, um diesem das Detektionssignal zuzuführen,
und **dass** die Steuereinheit (10) ferner mit dem Halbbrücken-Inverter (4)verbunden ist, um die Frequenz des von diesem erzeugten hochfrequenten Betriebsstromes für die HID-Lampe (5) zu ändern, wenn der Steuereinheit (10) ein Feststellungssignal zugeführt wird.

16. HID-Leuchte, aufweisend ein Betriebsgerät nach einem der Ansprüche 8 bis 15 sowie wenigstens eine angeschlossene HID-Lampe.

## Claims

1. A method for operating a HID lamp (5), whereby
- an operating unit has an inverter, which is supplied with DC voltage from an AC/DC converter connected to the mains (1), whereby the inverter generates a high-frequency operating current for the HID lamp (5), and with which the operating unit supplies the HID lamp,
- a frequency filter (6) filters out a periodic detection signal transferred from the operating unit to the HID lamp with the high-frequency operating current, and whereby
- an evaluation circuit to which the detection signal filtered out by the frequency filter (6) is supplied, whereby the evaluation circuit evaluates the filtered-out detection signal in order to detect an acoustic resonance,
**characterized in that**
- a generator contained in the operating unit modulates the supply voltage of the inverter of the operating unit in order to specifically produce the detection signal, i.e. independently of the supply voltage, for the purpose of determining the acoustic resonance.

2. Method according to claim 1,
whereby, for the production of the detection signal, the supply voltage of the inverter is specifically modulated by an actively clocked PFC converter (2) of the operating unit, for example, whereby the setpoint of the control of the PFC converter is modulated.

3. Method according to any one of the preceding claims, whereby the detection signal has a period duration and/or amplitude form which deviates from the period duration and/or amplitude form due to the modulation of the operating current of the HID lamp caused by the mains frequency.

4. Method according to any one of the preceding claims, **characterised in that** the detection signal is sawtooth-shaped.

5. Method according to any one of the preceding claims, **characterised in that**
- both the detection signal produced by the generator as well as the detection signal filtered out by the frequency filter (6) are differentiated according to time and then compared with each other.

6. Method according to claim 1,
**characterized in that**
- the filtered-out detection signal is obtained by filtering it out of the modulated operating current in a low pass filter,
- the filtered-out detection signal is scanned in a sample-and-hold circuit
- the scanned value is then digitised in an A/D converter,
- the scanned value, previously delayed by the scan time interval, is subtracted from each current scanned value,
- the subtraction value is compared with a predetermined reference value representing an actual differentiation value,
- and, in the event of a deviation of the subtraction value from the reference value, an evaluation signal indicating a more acoustic resonance is output.

7. Method according to claim 6,
**characterised in that**
- the evaluation signal is used to vary the frequency of the high-frequency operating current.

8. Operating unit for an HID lamp (5) with an AC/DC converter to be connected with the mains (1),
- with an inverter supplied with direct voltage from the AC/DC converter, which produces a high-frequency operating current for the HID lamp (5),
- with a frequency filter (6) for filtering of a periodic detection signal transferred to the HID lamp with the high-frequency operating current from the operating unit,
- and with an evaluation circuit to which the filtered-out detection signal is supplied, and whereby the evaluation circuit for determining an acoustic resonance, evaluates the filtered-out detection signal,
**characterised in that**,
- a generator contained in the operating unit for the production of the detection signal modulates the supply voltage of the inverter, and thus specifically the detection signal, i.e. independently of the supply voltage of the inverter, for the purpose of the evaluation of the acoustic resonance.

9. Operating unit according to claim 8,
whereby the generator for producing the detection signal, specifically modulates the supply voltage of the inverter through an actively clocked PFC Converter (2), e.g. whereby a control unit modulates the setpoint of the control of the PFC converter (2).

10. Operating unit according to claim 8 or 9,
whereby the detection signal has a period duration and/or amplitude form different from that of the operating current of the HID lamp (5) caused by the modulation of the mains voltage.

11. Operating unit according to one of the claims 8 to 10, **characterised in that**
- the AC/DC converter has a PFC converter (2),
- and the inverter is a half-bridge inverter (4) with two opposingly clocked high frequency switches.

12. Operating unit according to one of the claims 8 to 11,
**characterised in that**
- the evaluation circuit contains two differentiating circuit parts (7, 8)
- whereby one of the parts (8) is supplied with the detection signal produced by the generator, while the other part (7) is supplied with the filtered-out detection signal,
- and the outputs of the two differentiating circuit parts (7, 8) are connected to a comparator (9) which outputs an evaluation signal indicating an acoustic resonance on deviation of the differentiated filtered-out detection signals.

13. Operating unit according to one of the claims 8 to 12, **characterised in that**
- the differentiating circuit part (7) for the filtered-out detection signal contains a sample-and-hold circuit (7a), an adjacent A/D converter (7b) and an adjacent delay element (7c),
- the delay time of the delay element (7c) is equal to the scan time interval of the sample-and-hold circuit (7a),
- the differentiation circuit part (7) further comprises a subtracting element (7d) which is connected, on the one hand, to the input and, on the other hand, to the output of the delay element (7c),
- the output of the subtracting element (7d) is connected to the input of a comparator (9),
- a reference value representing a differentiated detection signal value is supplied to the other input of the comparator (9),
- and, in the event of deviation of the signal values supplied to its inputs, the comparator (9) emits an evaluation signal indicating an acoustic resonance.

14. Operating unit according to any one of the claims 12 or 13, **characterised in that**
- the operating unit comprises a control unit (10) that contains the generator for producing the detection signal,
- the control unit is connected with the comparator (9) to receive and evaluate the detection signal,
- the control unit (10) is connected to the AC/DC converter to supply the evaluation signal,
- and the control unit (10) is further connected to the inverter in order to change the frequency of the high-frequency operating current produced by the inverter for the HID lamp (5) when the control unit (10) is supplied with an evaluation signal.

15. Operating unit according to one of the claims 12 to 14, **characterised in that**
- the operating unit comprises a control unit (10) that contains the generator for producing the detection signal,
- the control unit is connected with the comparator (9) to receive and evaluate the evaluation signal,
- the control unit (10) is connected to the half-bridge inverter (4) to supply this with the detection signal,
- and the control unit (10) is further connected with the half-bridge inverter (4) to change the frequency of the high-frequency current produced by this for the HID lamp (5) when the control unit (10) is supplied with an evaluation signal.

16. HID lamp comprising an operating unit according to one of the claims 8 to 15 and at least one connected HID lamp.

## Revendications

1. Procédé destiné à faire fonctionner une lampe HID (5), dans lequel :
- un appareil d'actionnement présente un onduleur qui est alimenté par un convertisseur AC/DC à tension continue raccordé au réseau (1), l'onduleur produisant un courant de service à haute fréquence pour la lampe HID (5) avec lequel l'appareil d'actionnement alimente la lampe HID,
- un filtre de fréquence (6) filtre un signal de détection périodique transmis à la lampe HID par l'appareil d'actionnement en même temps que le courant de service à haute fréquence, et
- le signal de détection filtré par le filtre de fréquence (6) est amené à un montage d'exploitation, le montage d'exploitation analysant le signal de détection filtré pour constater une résonance acoustique,
**caractérisé**
- **en ce qu'**un générateur compris dans l'appareil d'actionnement module la tension d'alimentation de l'onduleur de l'appareil d'actionnement et produit ainsi le signal de détection de façon ciblée, c'est-à-dire indépendamment de la tension d'alimentation, pour l'objectif de la constatation de la résonance acoustique.

2. Procédé selon la revendication 1,
dans lequel pour produire le signal de détection, la tension d'alimentation de l'onduleur est modulée de façon ciblée par un convertisseur PFC (2) cadencé activement de l'appareil d'actionnement, par exemple en ce que la valeur de consigne du réglage du convertisseur PFC est modulée.

3. Procédé selon l'une des revendications précédentes,
dans lequel le signal de détection a une durée de période et/ou une forme d'amplitude qui diffère de la durée de période et/ou de la forme d'amplitude de la modulation du courant de service de la lampe HID provoquée par une fréquence de réseau.

4. Procédé selon l'une des revendications précédentes,
**caractérisé en ce que** le signal de détection a une forme en dents de scie.

5. Procédé selon l'une des revendications précédentes,
**caractérisé**
**en ce qu'**à la fois le signal de détection produit par le générateur et le signal de détection filtré par le filtre de fréquence (6) sont différenciés en tant que tels en fonction du temps, puis comparés l'un avec l'autre.

6. Procédé selon la revendication 1,
**caractérisé**
**en ce que** le signal de détection filtré est obtenu à partir du courant de service modulé par filtrage dans un passe-bas,
**en ce que** le signal de détection filtré est balayé dans un circuit Sample-and-Hold, en ce que les valeurs de balayage sont ensuite numérisées dans un convertisseur A/D,
**en ce que** la valeur de balayage précédente retardée de l'intervalle de temps de balayage est soustraite de chaque valeur de balayage actuelle,
**en ce que** la valeur de soustraction est comparée avec une valeur de référence prédéfinie représentant une valeur effective de différenciation,
et **en ce que** si la valeur de soustraction diffère de la valeur de référence, un signal de constatation affichant une résonance acoustique est émis.

7. Procédé selon la revendication 6,
**caractérisé**
**en ce que** le signal de constatation est utilisé pour modifier la fréquence du courant de service à haute fréquence.

8. Appareil d'actionnement pour une lampe HID (5),
ayant un convertisseur AC/DC devant être raccordé au réseau (1),
ayant un onduleur alimenté en tension continue par le convertisseur AC/DC, qui produit un courant de service à haute fréquence pour la lampe HID (5),
ayant un filtre de fréquence (6) pour filtrer un signal de détection périodique transmis à la lampe HID par l'appareil d'actionnement en même temps que le courant de service à haute fréquence,
et ayant un montage d'exploitation auquel le signal de détection filtré est amené, le montage d'exploitation analysant le signal de détection filtré pour constater une résonance acoustique,
**caractérisé**
**par** un générateur compris dans l'appareil d'actionnement, qui module la tension d'alimentation de l'onduleur pour produire le signal de détection et produit ainsi le signal de détection de façon ciblée, c'est-à-dire indépendamment de la tension d'alimentation, pour l'objectif de la constatation de la résonance acoustique.

9. Appareil d'actionnement selon la revendication 8,
dans lequel pour produire le signal de détection, le générateur module la tension d'alimentation de l'onduleur de façon ciblée au moyen d'un convertisseur PFC (2) cadencé activement, par exemple en ce qu'une unité de commande module la valeur de consigne du réglage du convertisseur PFC (2).

10. Appareil d'actionnement selon la revendication 8 ou 9,
dans lequel le signal de détection a une durée de période et/ou une forme d'amplitude qui diffère de la modulation du courant de service de la lampe HID (5) provoquée par la tension du réseau.

11. Appareil d'actionnement selon l'une des revendications 8 à 10,
**caractérisé**
**en ce que** le convertisseur AC/DC présente un convertisseur PFC (2),
et **en ce que** l'onduleur est un inverseur à demi-pont (4) ayant deux commutateurs cadencés à haute fréquence en sens inverse.

12. Appareil d'actionnement selon l'une des revendications 8 à 11,
**caractérisé**
**en ce que** le montage d'exploitation contient deux parties de montage de différenciation (7, 8),
le signal de détection produit par le générateur étant amené à l'une (8) et le signal de détection filtré étant amené à l'autre (7),
et **en ce que** les sorties des deux parties de montage de différenciation (7, 8) sont reliées à un comparateur (9) qui, si le signal de détection filtré différencié diffère du signal de détection différencié, émet un signal de constatation affichant une résonance acoustique.

13. Appareil d'actionnement selon l'une des revendications 8 à 12,
**caractérisé**
**en ce que** la partie de montage de différenciation (7) pour le signal de détection filtré contient un circuit Sample-and-Hold (7a), un convertisseur A/D (7b) qui y est raccordé et un élément de retard (7c) qui y est raccordé,
**en ce que** le temps de retard de l'élément de retard (7c) est égal à l'intervalle de temps de balayage du circuit Sample-and-Hold (7a),
**en ce que** la partie de montage de différenciation (7) contient en outre un élément de soustraction (7d) qui est relié d'un côté à l'entrée et de l'autre côté à la sortie de l'élément de retard (7c),
**en ce que** la sortie de l'élément de soustraction (7d) est reliée à l'entrée d'un comparateur (9),
**en ce qu'**une valeur de référence, qui représente une valeur de signal de détection différenciée, est amenée à l'autre entrée du comparateur (9),
et **en ce que** le comparateur (9), si les valeurs de signal qui sont amenées à ses entrées diffèrent, émet un signal de constatation affichant une résonance acoustique.

14. Appareil d'actionnement selon l'une des revendications 12 ou 13,
**caractérisé**
**en ce que** l'appareil d'actionnement présente une unité de commande (10) qui contient le générateur destiné à produire le signal de détection,
**en ce que** l'unité de commande est reliée avec le comparateur (9) pour recevoir et pour analyser le signal de constatation,
**en ce que** l'unité de commande (10) est reliée avec le convertisseur AC/DC pour lui amener le signal de détection,
et **en ce que** l'unité de commande (10) est en outre reliée avec l'onduleur pour modifier la fréquence du courant de service à haute fréquence produit par celui-ci pour la lampe HID (5) lorsqu'un signal de constatation est amené à l'unité de commande (10).

15. Appareil d'actionnement selon l'une des revendications 12 à 14,
**caractérisé**
**en ce que** l'appareil d'actionnement présente une unité de commande (10) qui contient le générateur destiné à produire le signal de détection,
**en ce que** l'unité de commande est reliée avec le comparateur (9) pour recevoir et pour analyser le signal de constatation,
**en ce que** l'unité de commande (10) est reliée avec l'inverseur à demi-pont (4) pour lui amener le signal de détection,
et **en ce que** l'unité de commande (10) est en outre reliée avec l'inverseur à demi-pont (4) pour modifier la fréquence du courant de service à haute fréquence produit par celui-ci pour la lampe HID (5) lorsqu'un signal de constatation est amené à l'unité de commande (10).

16. Luminaire HID présentant un appareil d'actionnement selon l'une des revendications 8 à 15 ainsi qu'au moins une lampe HID raccordée.
